# EUROPEAN PATENT APPLICATION

(11) **EP 4 546 020 A1**
(43) Date of publication of application: **30.04.2025**
(21) Application number: 23829932.5
(22) Date of filing: 12.06.2023
(51) Int. Cl.: G02B 6/42

(54) **LIQUID COOLING STRUCTURE OF OPTICAL MODULE, AND OPTICAL MODULE**

(30) Priority: 27.06.2022 CN 202210733643
(71) Applicant: ZTE Corporation, Shenzhen, Guangdong 518057 (CN)
(72) Inventor: TANG, Ningfeng, Shenzhen, Guangdong 518057 (CN); ZHANG, Yajun, Shenzhen, Guangdong 518057 (CN)
(74) Representative: Savi, Massimiliano
(86) International application number: PCT/CN2023/099712
(87) International publication number: WO 2024/001749

(57) **Abstract**

A liquid cooling structure of an optical module, and an optical module. The liquid cooling structure comprises a heat dissipation plate (100) and a heat conduction laver (200), wherein the heat dissipation plate (100) comprises a cooling liquid input port (110) and a cooling liquid output port (120), the cooling liquid input port (110) and the cooling liquid output port (120) communicate with an inner cavity of the heat dissipation plate (100) so as to form a cooling liquid flow path, the heat conduction laver (200) covers an upper surface and/or a lower surface of the heat dissipation plate (100), and the heat conduction laver (200) comes into contact with a heating assembly (300) so as to transfer heat from the heating assembly (300) to the heat dissipation plate (100).

## Description

### CROSS-REFERENCE TO RELATED APPLICATION

This application is filed on the basis of Chinese patent application No. 202210733643.1 filed June 27, 2022, and claims priority to the Chinese patent application, the entire contents of which are incorporated herein by reference.

### TECHNICAL FIELD

The present disclosure relates to the technical field of heat dissipation, and in particular, to a liquid cooling structure of an optical module, and an optical module.

### BACKGROUND

The switching capacity of large-capacity and high-density chips is gradually increasing along with the development of technologies. The power consumption of Serializer-Deserializer (SerDes) and pluggable optical modules accounts for an increasing proportion of the power consumption of the entire device. To solve the problem of large amount of heat generated by optoelectronic interconnection, a Co-Packaged Optics (CPO) technology is used to reduce the power consumption of the device in the industry.

In a CPO implementation scheme, generally an external light source is used to separate the light source from a modulator, thereby to reduce the design difficulty of a light engine and achieve high reliability. External light sources in existing devices mainly use air cooling for heat dissipation. However, high-power light sources, such as those used in CPO implementations, require a stronger heat dissipation capacity. At present, an External Laser Small Form-Factor Pluggable (ELSFP) module defined by the Optical Internetworking Forum (OIF) has a maximum power consumption of 56.4 W under an 8-laser configuration, which has far exceeded the heat dissipation capacity of ordinary air-cooling optical modules.

### SUMMARY

The following is a summary of the subject matter set forth in this description. This summary is not intended to limit the scope of protection of the claims.

Embodiments of the present disclosure provide a liquid cooling structure of an optical module, and an optical module.

In accordance with a first aspect of the present disclosure, an embodiment provides a liquid cooling structure of an optical module, including: a heat dissipation plate, including a coolant input port and a coolant output port, where the coolant input port and the coolant output port are in communication with an inner cavity of the heat dissipation plate to form a coolant flow path; and a heat conduction layer, covering an upper surface and/or a lower surface of the heat dissipation plate, where the heat conduction layer is in contact with a heat generating assembly in the optical module to transfer heat from the heat generating assembly to the heat dissipation plate.

In accordance with a second aspect of the present disclosure, an embodiment provides an optical module, including: a heat generating assembly; and a liquid cooling structure, including a heat dissipation plate and a heat conduction layer, where the heat dissipation plate includes a coolant input port and a coolant output port, and the coolant input port and the coolant output port are in communication with an inner cavity of the heat dissipation plate to form a coolant flow path; and the heat conduction layer covers an upper surface and/or a lower surface of the heat dissipation plate, and in contact with the heat generating assembly to transfer heat from the heat generating assembly to the heat dissipation plate.

Additional features and advantages of the present disclosure will be set forth in the description which follows, and in part will be obvious from the description, or may be learned by the practice of the present disclosure. The objects and other advantages of the present disclosure can be realized and obtained by the structures particularly pointed out in the description, claims and drawings.

### BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, but are not intended to limit the technical schemes of the present disclosure.
FIG. 1 is a structural diagram of a single-layer liquid cooling structure according to an embodiment of the present disclosure;
FIG. 2 is a structural diagram of a double-layer liquid cooling structure according to an embodiment of the present disclosure;
FIG. 3 is an exploded view of a liquid cooling structure where the heat dissipation plate is provided with a groove into which a heat generating module is embedded according to an embodiment of the present disclosure;
FIG. 4 is a structural diagram of converging of a three-layer liquid cooling structure according to an embodiment of the present disclosure;
FIG. 5 is a structural diagram of distribution of a three-layer liquid cooling structure in an optical module according to an embodiment of the present disclosure;
FIG. 6 is a structural diagram of a rear panel with a front coolant inlet/outlet configuration according to an embodiment of the present disclosure;
FIG. 7 is a structural diagram of a rear panel with a rear coolant inlet/outlet configuration according to an embodiment of the present disclosure;
FIG. 8 is an exploded view of an optical module with a front coolant inlet/outlet configuration according to an embodiment of the present disclosure; and
FIG. 9 is an exploded view of an optical module with a rear coolant inlet/outlet configuration according to an embodiment of the present disclosure.

### DETAILED DESCRIPTION

To make the objects, technical schemes, and advantages of the present disclosure clear, the present disclosure is described in further detail in conjunction with accompanying drawings and embodiments. It should be understood that the embodiments described herein are merely used for illustrating the present disclosure, and are not intended to limit the present disclosure.

In the description and accompanying drawings of the present disclosure, the terms "first", "second", "third", "fourth", and so on (if any) are intended to distinguish between similar objects but do not necessarily indicate a specific sequence or a precedence order. It is to be understood that the data termed in such a way are interchangeable in appropriate circumstances, such that the embodiments of the present disclosure described herein can be implemented in orders other than the order illustrated or described herein. Moreover, the terms "include," "comprise," and any other variants thereof mean are intended to cover a non-exclusive inclusion. For example, a process, method, system, product, or apparatus that includes a list of steps or units is not necessarily limited to those expressly listed steps or units, but may include other steps or units not expressly listed or inherent to such a process, method, product, or apparatus.

It is to be understood that in the present disclosure, "at least one" means one or more and "a plurality of" means two or more. The term "and/or" is used for describing an association between associated objects and representing that three associations may exist. For example, "A and/or B" may indicate that only A exists, only B exists, and both A and B exist, where A and B may be singular or plural. The character "/" generally indicates an "or" relation between the associated objects. "At least one of" and similar expressions refer to any combination of items listed, including one item or any combination of a plurality of items. For example, at least one of a, b, or c may represent a, b c, "a and b", "a and c", "b and c", or "a, b and c", where a, b and c may be singular or plural.

It should be understood that in the description of the embodiments of the present disclosure, the term "plurality of" (or multiple) means at least two, the term such as "greater than", "less than", "exceed" or variants thereof prior to a number or series of numbers is understood to not include the number adjacent to the term. The term "at least" prior to a number or series of numbers is understood to include the number adjacent to the term "at least", and all subsequent numbers or integers that could logically be included, as clear from context.

At present, air cooling can meet the heat dissipation requirements of normal-capacity optical modules. However, the heat dissipation capacity provided by existing air cooling systems cannot meet the heat dissipation requirements of large-capacity optical modules, for example, ELSFP optical modules using the CPO technology, so that stronger heat dissipation means is required. Optical modules are generally pluggable. At present, to optimize heat dissipation of pluggable optical modules, a heat pipe or vapor chamber may be used for contact with the housing of the ELSFP to improve the heat dissipation efficiency. However, due to the need for pluggability, the contact thermal resistance between the heat pipe or vapor chamber and the housing of the ELSFP is very large and the problem cannot be fundamentally solved.

In view of above, embodiments of the present disclosure provide a liquid cooling structure of an optical module, and an optical module, where a coolant flow path is constructed in an inner cavity of a heat dissipation plate, and a heat generating assembly in the optical module is in contact with the heat dissipation plate through a heat conduction layer for heat conduction. As such, the heat dissipation capacity is greatly improved compared with air cooling. The liquid cooling structure may be applied to various devices using a CPO chip, such as an equipment room of a large data center, a high-density High Performance Computing (HPC) center, an Artificial Intelligence (AI) training device, etc.

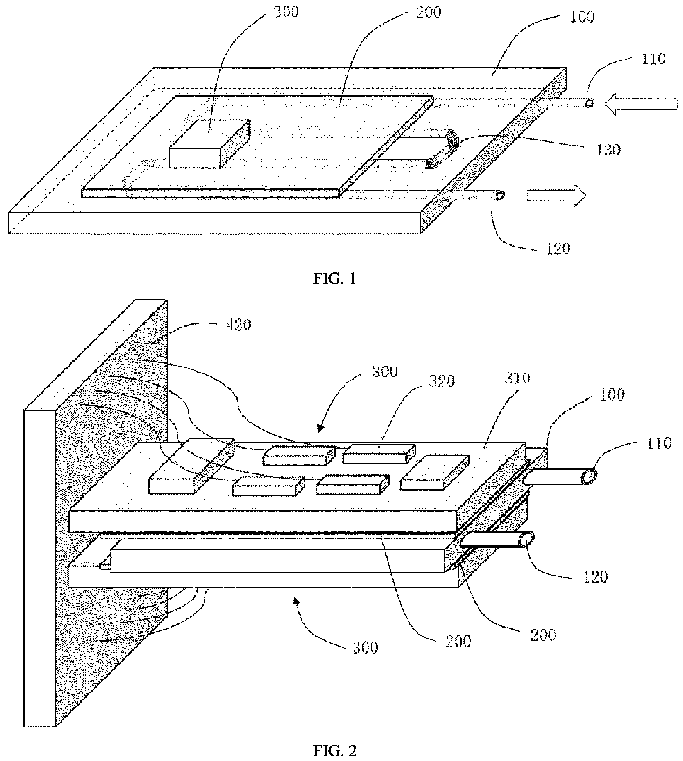

Referring to FIG. 1, an embodiment of the present disclosure provides a liquid cooling structure of an optical module, including:
a heat dissipation plate 100, including a coolant input port 110 and a coolant output port 120, where the coolant input port 110 and the coolant output port 120 are in communication with an inner cavity of the heat dissipation plate 100 to form a coolant flow path; and
a heat conduction layer 200, covering an upper surface and/or a lower surface of the heat dissipation plate 100, where the heat conduction layer 200 is in contact with a heat generating assembly 300 in the optical module to transfer heat from the heat generating assembly 300 to the heat dissipation plate 100.

The heat dissipation plate 100 is configured for dissipating heat from the heat generating assembly 300 in the optical module. The heat dissipation plate 100 is generally in the shape of a flat plate to achieve a closer contact with the heat generating assembly 300. Therefore, for convenience of description, the following embodiments and drawings will be described using an example where the heat dissipation plate 100 is in the shape of a flat plate. Because both the upper surface and the lower surface of the heat dissipation plate 100 may be configured to contact the heat generating assembly 300, the heat generating assembly 300 may be arranged on the upper surface or the lower surface of the heat dissipation plate 100, or the heat generating assembly 300 may be arranged on both the upper surface and the lower surface of the heat dissipation plate 100.

In the following, single-layer heat dissipation will be described as an example, i.e., one heat generating assembly 300 corresponds to one heat dissipation plate 100.

Referring to FIG. 1, the heat conduction layer 200 is arranged on the upper surface of the heat dissipation plate 100, and is in contact with the heat dissipation assembly 300 to transfer heat of the heat dissipation assembly 300 to the heat dissipation plate 100. The coolant input port 110 and the coolant output port 120 are provided on a side surface of the heat dissipation plate 100. The coolant input port 110 and the coolant output port 120 are in communication with the inner cavity of the heat dissipation plate 100. A coolant is inputted into the coolant input port 110, passes through the inner cavity of the heat dissipation plate 100, and is finally outputted from the coolant output port 120, such that heat absorbed by the heat dissipation plate 100 can be effectively taken away. The coolant input port 110 and the coolant output port 120 are connected to a coolant circulation system. After absorbing heat, the coolant releases heat in the coolant circulation system to cool down, and is then pumped into the coolant input port 110 again to exchange heat with the heat dissipation plate 100. This cycle is repeatedly performed.

It can be understood that the form of the heat generating assembly 300 is not limited. The heat generating assembly 300 is generally a circuit board, modules on which generate heat during operation. The modules include, but not limited to, a power module, a laser generator, a control unit, etc. Heat generated by these modules is transferred through the circuit board to the heat dissipation plate 100 for heat dissipation. To better conduct heat, the heat conduction layer 200 is arranged between the heat generating assembly 300 and the heat dissipation plate 100. The heat conduction layer 200 uses a Thermal Interface Material (TIM) with high thermal conductivity, e.g., thermally conductive silicone grease, etc. The thermal resistance of the TIM is very low, and the TIM can achieve a satisfactory contact between a heat source and a cooling plate, thereby maintaining desirable heat exchange capacity.

In the following, double-layer heat dissipation will be described as an example, i.e., two heat generating assemblies 300 correspond to one heat dissipation plate 100.

Referring to FIG. 2, the heat conduction layer 200 is arranged on each of the upper surface and the lower surface of the heat dissipation plate 100, and two heat generating assemblies 300 are respectively distributed on an upper side and a lower side of the heat dissipation plate 100, and respectively transfer heat to the heat dissipation plate 100 through the corresponding heat conduction layers 200. The coolant input port 110 and the coolant output port 120 are provided on a side surface of the heat dissipation plate 100. The coolant input port 110 and the coolant output port 120 are in communication with the inner cavity of the heat dissipation plate 100. Similarly, the coolant input port 110 and the coolant output port 120 are connected to a coolant circulation system. A coolant is circulated through the coolant input port 110 and the coolant output port 120, to continuously absorb heat of the heat dissipation plate 100 to achieve a heat dissipation effect.

Similarly, the form of the heat generating assembly 300 in the case of the double-layer heat dissipation structure is not limited, and the heat conduction layer 200 may also use TIM with high thermal conductivity to assist heat conduction to ensure the heat exchange efficiency.

In the embodiments of single-layer heat dissipation and double-layer heat dissipation, the configuration of the inner cavity of the heat dissipation plate 100 may be designed according to actual requirements. Two configuration forms will be described below.

In a first configuration form, the inner cavity of the heat dissipation plate 100 is provided with a coolant pipe 130, and the coolant pipe 130, the coolant input port 110, and the coolant output port 120 form the coolant flow path. The coolant pipe 130 may have various structures. For example, the coolant pipe 130 is in the shape of a coil in the inner cavity of the heat dissipation plate 100. The shape of the coil may be configured according to actual requirements. For example, a single-turn coil is provided, or the coil is distributed according to a heat generating area of the heat generating assembly 300, or a multi-turn coil is provided along the plane of the heat dissipation plate 100, or a multi-turn coil is provided in a three-dimensional distribution, which is not limited herein. Through the above manner, the heat in the heat dissipation plate 100 can be more fully absorbed, thereby achieving a better heat dissipation effect, as shown in FIG. 1.

In a second configuration form, the inner cavity of the heat dissipation plate 100 is provided with a coolant cavity, and the coolant cavity is respectively in communication with the coolant input port 110 and the coolant output port 120. For this configuration form, the inner cavity is directly filled with the coolant, and the heat dissipation plate 100 is not required to have high support performance. Therefore, the shape of the inner cavity may also be configured according to actual requirements. For example, the volume of the inner cavity is set according to the amount of heat generated, or the shape of the inner cavity is adjusted according to the heat generating area of the heat generating assembly 300, or the thickness of the inner cavity may be reduced and a curved flow channel is configured in the inner cavity when higher heat absorption efficiency is required, which is not limited herein. Through the above manner, the heat in the heat dissipation plate 100 can also be more fully absorbed, thereby achieving a better heat dissipation effect,

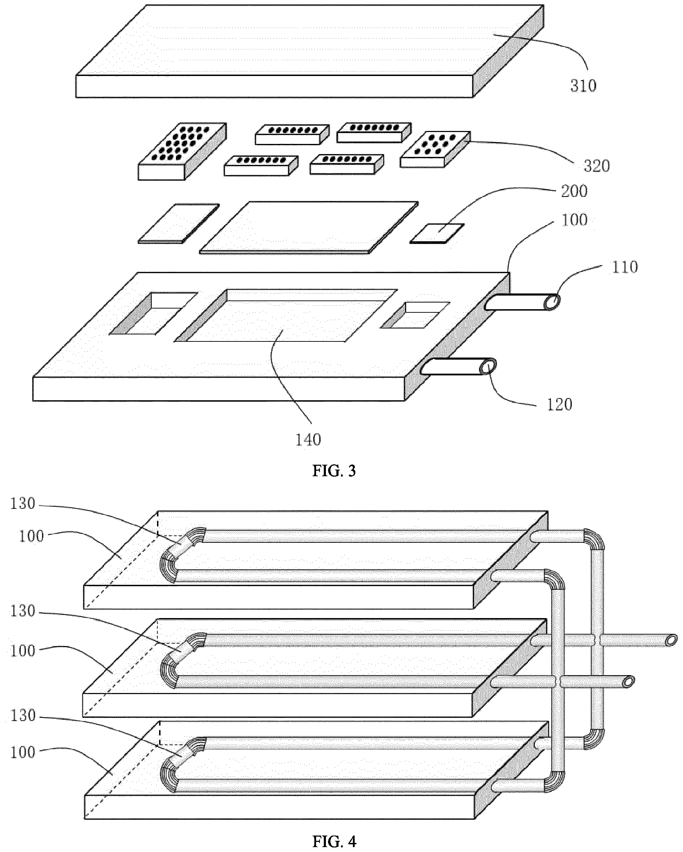

It should be noted that for the heat generating assembly 300, although the circuit board may be designed to contact the heat conduction layer 200 as mentioned above, the modules on the circuit board may also be designed to contact the heat conduction layer 200 in some cases. When the heights of the modules on the circuit board are relatively consistent, tops of the modules directly contact the heat conduction layer 200, thereby achieving more direct heat conduction. Certainly, in most cases, the modules on the circuit board have different heights and cannot fit to the flat plate-shaped heat dissipation plate 100. Therefore, referring to FIG. 3, a groove 140 is further provided on the upper surface and/or the lower surface of the heat dissipation plate 100, and the heat conduction layer 200 covers the groove 140, such that the heat generating assembly 300 or a heat generating module 320 of the heat generating assembly 300 is embedded in the groove 140. More direct heat conduction can also be achieved by embedding the module on the heat generating assembly 300 into the groove 140 and using the heat conduction layer 200 to make the bottom of the groove 140 and the top of the heat generating module 320 closely contact each other. In addition, the use of the groove 140 reduces the volume of the liquid cooling structure, to adapt to miniaturized product design.

There may be a plurality of grooves 140, and the shape of the groove 140 may be configured according to actual requirements, which is not limited herein. In another possible embodiment, the groove 140 is configured for embedding the circuit board, not the modules on the circuit board.

For ease of coupling to the coolant circulation system and to satisfy the need for pluggability of the optical module, a quick joint (not shown) is arranged at an end portion of each of the coolant input port 110 and the coolant output port 120. With the quick joints, the coolant flow path can be conveniently connected to the coolant circulation system. The quick joints provide a simple and quick connection mode, is suitable for repeated plugging and unplugging, and has certain sealing performance after connection to avoid coolant leakage.

It can be understood that the coolant input ports 110 and the coolant output ports 120 of a plurality of liquid cooling structures may converge. Referring to FIG. 4, in three liquid cooling structures, three coolant input ports 110 converge at the same entrance, three coolant output ports 120 converge at the same exit, and the entrance and the exit may be connected to the coolant circulation system. In some possible cases, to allow heat of the three liquid cooling structures to be evenly absorbed for circulation, it is necessary to adopt a flow balancing design for the pipes that converge, which will not be detailed herein.

An embodiment of the present disclosure provides an optical module, including a heat generating assembly 300 and a liquid cooling structure. The liquid cooling structure includes a heat dissipation plate 100 and a heat conduction layer 200. The heat dissipation plate 100 includes a coolant input port 110 and a coolant output port 120. The coolant input port 110 and the coolant output port 120 are in communication with an inner cavity of the heat dissipation plate 100 to form a coolant flow path. The heat conduction layer 200 covers an upper surface and/or a lower surface of the heat dissipation plate 100. The heat conduction layer 200 is in contact with the heat generating assembly 300 to transfer heat from the heat generating assembly 300 to the heat dissipation plate 100.

Similar to the liquid cooling structure of the above embodiment, the liquid cooling structure of the optical module of this embodiment of the present disclosure also includes the heat dissipation plate 100 and the heat conduction layer 200, and the heat generating assembly 300 and the heat dissipation plate 100 are connected through the heat conduction layer 200, such that the heat of the heat generating assembly 300 is transferred to the heat dissipation plate 100, thereby realizing liquid-cooling heat dissipation.

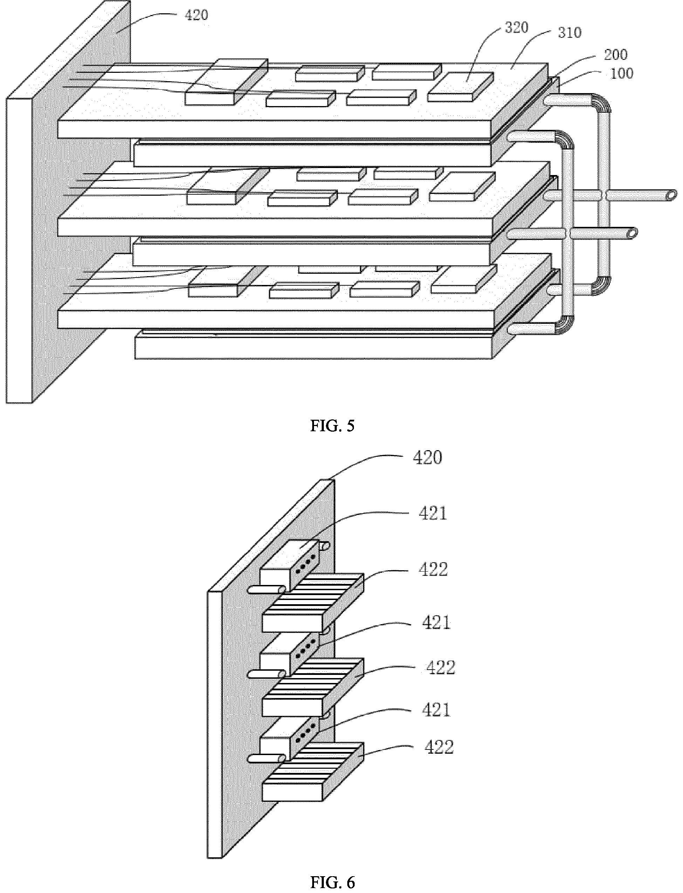

Referring to FIG. 2 or FIG. 5, the heat generating assembly 300 of the optical module includes a heat generating module 320 and a main board 310. One side of the main board 310 is provided with the heat generating module 320, and the other side of the main board 310 is connected to the heat conduction layer 200. In this configuration, the heat of the heat generating module 320 is transferred to the heat dissipation plate 100 through the main board 310, and the heat dissipation plate 100 may directly adopt a flat plate structure without special processing, thereby achieving high universality. In another configuration, referring to FIG. 3, a groove 140 is provided on the upper surface and/or the lower surface of the heat dissipation plate 100, and the heat conduction layer 200 covers the groove 140. In this case, the heat generating assembly 300 may be turned upside down with the side with the heat generating module 320 facing the groove 140, and the heat generating module 320 is embedded in the groove 140. As such, the heat generating module 320 can directly contact the heat dissipation plate 100. This configuration provides a better heat dissipation effect, but requires the formation of the groove matching the heat generating assembly 300.

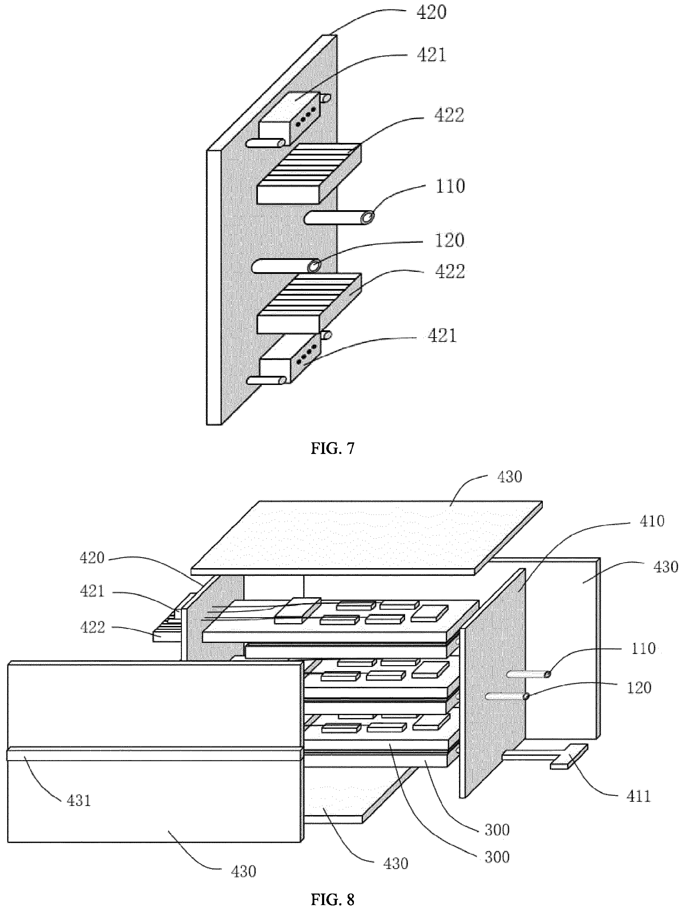

In some embodiments, referring to FIG. 6 to FIG. 9, the optical module further includes a front panel 410 and a rear panel 420. The front panel 410 includes a retractable pull member 411. The rear panel 420 includes an optical connector 421 and an electrical connector 422. The optical connector 421 and the electrical connector 422 are connected to modules of corresponding types on the heat generating assembly 300. The optical module is elongated and is inserted into a device along a length direction thereof. Therefore, the front panel 410 and the rear panel 420 in the embodiments of the present disclosure are relative terms. Referring to FIG. 8, the front panel 410 is the side facing the installation personnel during plugging and unplugging of the optical module, and the rear panel 420 is the side facing the device during plugging and unplugging of the optical module. In the embodiment of the present disclosure, the front panel 410 is provided with the pull member 411 to make it easy for the installation personnel to pull out the optical module. After completing the pull-out operation, the installation personnel may push the pull member 411 into the module to reduce the interference of external factors on the optical module. The rear panel 420 is provided with the optical connector 421 and the electrical connector 422. The optical connector 421 is connected to a corresponding module on the heat generating assembly 300, such as a laser module, and the electrical connector 422 is connected to a corresponding module on the heat generating assembly 300, such as a power module, a control unit, etc.

As can be learned from the liquid cooling structure described above, the optical module may have a front coolant inlet/outlet configuration or a rear coolant inlet/outlet configuration depending on the positions of the coolant input port 110 and the coolant output port 120. The front coolant inlet/outlet configuration means that the coolant input port 110 and the coolant outlet port 120 are arranged extending out of the front panel 410, and the rear coolant inlet/outlet configuration means that the coolant input port 110 and the coolant outlet port 120 are arranged extending out of the rear panel 420.

In some embodiments, in the front coolant inlet/outlet configuration, the front panel 410 is provided with through holes, and the coolant input port 110 and the coolant outlet port 120 pass through the through holes and face the installation personnel, as shown in FIG. 6 and FIG. 8. After inserting the optical module, the installation personnel connects the external coolant circulation system to the coolant input port 110 and the coolant output port 120, thus completing the installation. As the coolant is brought in from the front panel 410, in this embodiment both electrical and optical connectors are used for the simplified design of the connectors and higher reliability.

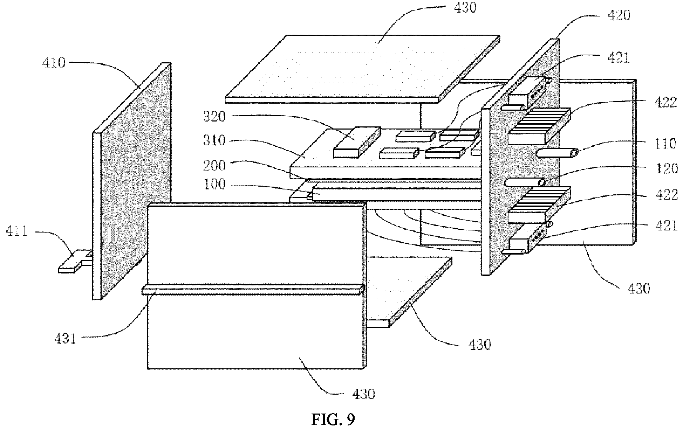

In the rear coolant inlet/outlet configuration, the rear panel 420 is provided with through holes, and the coolant input port 110 and the coolant output port 120 pass through the through holes and face the interior of the device, as shown in FIG. 7 and FIG. 9. Joints of the coolant circulation system are provided inside the device in advance. After the installation personnel inserts the optical module into the device, the coolant input port 110 and the coolant output port 120 can be aligned with and then coupled to the joints of the coolant circulation system, thus completing the installation. This module is applied to an environment where a CPO device provides a liquid cooling source. Therefore, there is no need to provide the coolant from outside the device. The advantage is that satisfactory cooling consistency is achieved in the system, and liquid-cooling heat dissipation can be realized in the whole system.

In some embodiments, the optical module further includes a side panel 430, and a guide rail 431 extending in a length direction of the optical module is arranged on the side panel 430. The guide rail 431 on the side panel 430 is provided to assist the installation of the optical module. Correspondingly, a corresponding structure matching the guide rail 431 on the side panel 430 of the optical module, e.g., a groove, may be provided in an optical module slot on the device, to achieve fool proofing to a certain extent. The installation personnel can conveniently complete the installation by aligning the guide rail 431 with the groove in the optical module slot. Certainly, the number of guide rails 431 may be more than one. For example, three guide rails 431 may be distributed on two sides, or distributed on three sides, or even distributed on the same side, as long as corresponding structures are provided in the optical module slot.

It can be understood that a plurality of heat generating assemblies 300 may be mounted in the optical module, and one heat dissipation plate 100 may be arranged for each heat generating assembly 300 or every two heat generating assemblies 300. When the optical module includes two or more liquid cooling structures, the liquid cooling structures are arranged in layers, the coolant input ports 110 converge and are connected to a coolant circulation system, and the coolant output ports 120 converge and are connected to the coolant circulation system. For example, referring to FIG. 5, the optical module includes three heat generating assemblies 300. One heat dissipation plate 100 is correspondingly provided for each heat generating assembly 300. The coolant input ports 110 on the three heat dissipation plates 100 converge at the same entrance, and the coolant output ports 120 on the three heat dissipation plates 100 converge at the same exit. The entrance and the exit are led out from the front panel 410. Correspondingly, the rear panel 420 is provided with three optical connectors 421 and three electrical connectors 422, respectively corresponding to the three heat generating assemblies 300. It can be understood that the three heat generating assemblies 300 are described by way of example only, and because a maximum of two heat generating assemblies 300 may be provided for each heat dissipation plate 100, the optical module may also include four, five, or six heat generating assemblies 300.

Based on the above, in the embodiments of the present disclosure, the heat dissipation plate 100 is in contact with the heat generating assembly 300 in the optical module through the heat conduction layer 200, such that the heat of the heat dissipation plate 300 is transferred to the heat dissipation plate 100. The heat dissipation plate 100 adopts liquid-cooling heat dissipation, and is provided with the coolant input port 110 and the coolant output port 120. In addition, the coolant flow path is constructed in the inner cavity of the heat dissipation plate 100 for heat exchange with the heat generating assembly 300, such that the heat of the heat generating assembly 300 is taken away by the coolant, thereby achieving a stronger heat dissipation capacity than that of air cooling. As such, the heat generation problem of large-capacity optical modules is solved, and higher laser power can be achieved.

The liquid cooling structure of an optical module, and the optical module according to the embodiments of the present disclosure at least have the following beneficial effects. The heat dissipation plate is in contact with the heat generating assembly in the optical module through the heat conduction layer, such that the heat of the heat dissipation plate is transferred to the heat dissipation plate. The heat dissipation plate adopts liquid-cooling heat dissipation, and is provided with the coolant input port and the coolant output port. In addition, the coolant flow path is constructed in the inner cavity of the heat dissipation plate for heat exchange with the heat generating assembly, such that the heat of the heat generating assembly is taken away by the coolant, thereby achieving a stronger heat dissipation capacity than that of air cooling. As such, the heat generation problem of large-capacity optical modules is solved, and higher laser power can be achieved.

Although some embodiments of the present disclosure have been described above, the present disclosure is not limited to the embodiments described above. Those having ordinary skills in the art can make various equivalent modifications or replacements without departing from the essence of the present disclosure. Such equivalent modifications or replacements fall within the scope defined by the claims of the present disclosure.

## Claims

1. A liquid cooling structure of an optical module, comprising:
a heat dissipation plate, comprising a coolant input port and a coolant output port, wherein the coolant input port and the coolant output port are in communication with an inner cavity of the heat dissipation plate to form a coolant flow path; and
a heat conduction layer, covering an upper surface and/or a lower surface of the heat dissipation plate, wherein the heat conduction layer is in contact with a heat generating assembly in the optical module to transfer heat from the heat generating assembly to the heat dissipation plate.

2. The liquid cooling structure of claim 1, wherein the heat dissipation plate further comprises a coolant pipe arranged in the inner cavity of the heat dissipation plate, and the coolant pipe, the coolant input port, and the coolant output port form the coolant flow path.

3. The liquid cooling structure of claim 2, wherein the coolant pipe is configured in the form of a coil.

4. The liquid cooling structure of claim 1, wherein the heat dissipation plate further comprises a coolant cavity arranged in the inner cavity of the heat dissipation plate, and the coolant cavity is in communication with the coolant input port and the coolant output port respectively.

5. The liquid cooling structure of claim 1, wherein the heat dissipation plate is provided with a groove on the upper surface and/or the lower surface of the heat dissipation plate, and the heat conduction layer covers the groove, such that the heat generating assembly or a heat generating module of the heat generating assembly is embedded in the groove.

6. The liquid cooling structure of claim 1, further comprising a quick joint arranged at an end portion of each of the coolant input port and the coolant output port.

7. An optical module, comprising:
a heat generating assembly; and
a liquid cooling structure, comprising a heat dissipation plate and a heat conduction layer, wherein the heat dissipation plate comprises a coolant input port and a coolant output port, and the coolant input port and the coolant output port are in communication with an inner cavity of the heat dissipation plate to form a coolant flow path; and the heat conduction layer covers an upper surface and/or a lower surface of the heat dissipation plate, and in contact with the heat generating assembly to transfer heat from the heat generating assembly to the heat dissipation plate.

8. The optical module of claim 7, wherein the heat generating assembly comprises a heat generating module and a main board, the heat generating module is arranged on one side of the main board, and the other side of the main board is connected to the heat conduction layer.

9. The optical module of claim 7, wherein the heat generating assembly comprises a heat generating module and a main board configured for carrying the heat generating module, the heat dissipation plate is provided with a groove on the upper surface and/or the lower surface of the heat dissipation plate, and the heat conduction layer covers the groove, such that the main board or the heat generating module is embedded in the groove.

10. The optical module of claim 7, further comprising a front panel and a rear panel, wherein the front panel comprises a retractable pull member, the rear panel comprises an optical connector and an electrical connector, and the optical connector and the electrical connector are connected to modules of corresponding types on the heat generating assembly.

11. The optical module of claim 10, wherein the coolant input port and the coolant output port extend out of the front panel, or the coolant input port and the coolant output port extend out of the rear panel.

12. The optical module of claim 11, wherein in the case of the coolant input port and the coolant output port being connected to the rear panel, the coolant input port and the coolant output port are connected to a coolant circulation system through the rear panel.

13. The optical module of claim 10, further comprising a side panel and a guide rail arranged on the side panel and extending along a length direction of the optical module.

14. The optical module of any one of claims 7 to 13, comprising two or more liquid cooling structures, wherein the liquid cooling structures are arranged in layers, the coolant input ports converge and are connected to the coolant circulation system, and the coolant output ports converge and are connected to the coolant circulation system.
